# EUROPEAN PATENT APPLICATION

(11) **EP 3 107 332 A1**
(43) Date of publication of application: **21.12.2016**
(21) Application number: 14885674.3
(22) Date of filing: 14.03.2014
(51) Int. Cl.: H04W 36/34

(54) **SWITCHING METHOD, TERMINAL, BASE STATION AND SYSTEM**

(71) Applicant: Huawei Technologies Co., Ltd, Shenzhen, Guangdong 518129 (CN)
(72) Inventor: QUAN, Wei, Shenzhen City Guangdong 518129 (CN); ZHANG, Jian, Shenzhen City Guangdong 518129 (CN); LIN, Bo, Shenzhen City Guangdong 518129 (CN); LI, Bingzhao, Shenzhen City Guangdong 518129 (CN)
(74) Representative: Pfenning, Meinig & Partner mbB
(86) International application number: PCT/CN2014/073471
(87) International publication number: WO 2015/135215

(57) **Abstract**

The present invention provides a handover method, a terminal, a base station, and a system, where the base station includes: a processing unit, configured to obtain first indication information, where the first indication information is used to indicate that a terminal is allowed to perform a forward handover; and a sending unit, configured to send the first indication information obtained by the processing unit to the terminal, so that the terminal sends a forward handover request message to a second base station according to the first indication information, receives a forward handover command message sent by the second base station according to the forward handover request message, and performs a forward handover from the first base station to the second base station according to the forward handover command message. According to the technical solutions provided in embodiments of the present invention, control by a base station over a handover process of a terminal can be improved in a wireless communications system.

## Description

### TECHNICAL FIELD

The present invention relates to wireless communications technologies, and in particular, to a handover method, a terminal, a base station, and a system.

### BACKGROUND

In a wireless communications system such as a Long Term Evolution (Long Term Evolution, LTE) system or a Long Term Evolution-Advanced (Long Term Evolution-Advanced, LTE-A) system of the 3^{rd} Generation Partnership Project (3^{rd} Generation Partnership Project, 3GPP), a handover method used by a terminal is as follows: After a handover initiated by the terminal from a first base station to a second base station fails, the terminal reselects a new base station, that is, a third base station; the terminal sends a reestablishment request message to the third base station; after the third base station receives the reestablishment request message, if the third base station does not have context information of the terminal, the third base station initiates an obtaining request to the first base station according to information in the reestablishment request message, so as to obtain the context information of the terminal. In this way, a handover of the terminal from the first base station to the third base station is completed.

However, in the foregoing handover method used by the terminal, the terminal may initiate, at any time, a reestablishment request to a base station selected by the terminal, and the first base station and the third base station cannot effectively control a handover process of the terminal. Consequently, the first base station and the third base station have poor control over the handover process of the terminal, which affects performance of the overall wireless communications system.

### SUMMARY

In view of this, embodiments of the present invention provide a handover method, a terminal, a base station, and a system, which can improve of control by the base station over a handover process of the terminal in a wireless communications system.

According to a first aspect, an embodiment of the present invention provides a base station, where the base station is a first base station, and the first base station includes:
a processing unit, configured to obtain first indication information, where the first indication information is used to indicate that a terminal is allowed to perform a forward handover; and
a sending unit, configured to send the first indication information obtained by the processing unit to the terminal, so that the terminal sends a forward handover request message to a second base station according to the first indication information, receives a forward handover command message sent by the second base station according to the forward handover request message, and performs a forward handover from the first base station to the second base station according to the forward handover command message.

In a first possible implementation manner of the first aspect, the first indication information includes an identifier for allowing a terminal to perform a forward handover or configuration information for allowing a terminal to perform a forward handover, where:
the configuration information for allowing a terminal to perform a forward handover includes at least one piece of the following information: indication information for allowing a terminal to perform an earlier radio link failure RLF, condition information for allowing a terminal to perform a forward handover, cell information that is included by the second base station and for allowing a terminal to perform a forward handover, short message authentication code for integrity shortMAC-I used by a terminal to perform a forward handover, or terminal information for allowing a terminal to perform a forward handover.

With reference to the first aspect or the first possible implementation manner of the first aspect, in a second possible implementation manner of the first aspect, the sending unit is further configured to:
send related information about a forward handover to the second base station, so that the second base station sends the forward handover command message to the terminal according to the forward handover request message and the related information about a forward handover, where the related information about a forward handover includes at least one piece of the following information: indication information used to indicate that a terminal accessing the first base station is allowed to perform a forward handover, condition indication information used to indicate that a terminal accessing the first base station is allowed to perform a forward handover, an identifier of a terminal that is in a terminal accessing the first base station and that is allowed to perform a forward handover, or context information of a terminal that is in a terminal accessing the first base station and that is allowed to perform a forward handover.

According to a second aspect, an embodiment of the present invention provides a terminal, including:
a receiving unit, configured to receive first indication information sent by a first base station, where the first indication information is used to indicate that the terminal is allowed to perform a forward handover; and
a processing unit, configured to trigger, according to the first indication information received by the receiving unit, a sending unit to send a forward handover request message to a second base station, where
the receiving unit is further configured to receive a forward handover command message sent by the second base station according to the forward handover request message; and
the processing unit is further configured to perform a forward handover from the first base station to the second base station according to the forward handover command message received by the receiving unit.

In a first possible implementation manner of the second aspect, the first indication information includes an identifier for allowing a terminal to perform a forward handover or configuration information for allowing a terminal to perform a forward handover, where
the configuration information for allowing a terminal to perform a forward handover includes at least one piece of the following information: indication information for allowing a terminal to perform an earlier RLF, condition information for allowing a terminal to perform a forward handover, cell information that is included by the second base station and for allowing a terminal to perform a forward handover, shortMAC-I used by a terminal to perform a forward handover, or terminal information for allowing a terminal to perform a forward handover.

With reference to the second aspect or the first possible implementation manner of the second aspect, in a second possible implementation manner of the second aspect, the first indication information includes the cell information that is included by the second base station and for allowing a terminal to perform a forward handover, and the processing unit is specifically configured to:
obtain information about a target cell; and
when determining that the cell information that is included by the second base station and for allowing a terminal to perform a forward handover includes the information about the target cell, trigger the sending unit to send the forward handover request message to the second base station.

According to a third aspect, an embodiment of the present invention provides a base station, where the base station is a second base station, and the second base station includes:
a receiving unit, configured to receive a forward handover request message sent by a terminal, where the forward handover request message is sent by the terminal according to first indication information sent by a first base station, and the first indication information is used to indicate that the terminal is allowed to perform a forward handover; and
a processing unit, configured to trigger, according to the forward handover request message received by the receiving unit, a sending unit to send a forward handover command message to the terminal, so that the terminal performs a forward handover from the first base station to the target second base station according to the forward handover command message.

In a first possible implementation manner of the third aspect, the processing unit is specifically configured to trigger, according to the forward handover request message received by the receiving unit, the sending unit to send an obtaining request message to the first base station;
the receiving unit is further configured to receive an obtaining response message sent by the first base station according to the obtaining request message, where the obtaining response message includes context information of the terminal; and
the processing unit is specifically configured to trigger, according to the context information of the terminal received by the receiving unit, the sending unit to send the forward handover command message to the terminal.

With reference to the third aspect, in a second possible implementation manner of the third aspect, the processing unit is specifically configured to trigger, according to the forward handover request message, the sending unit to send an obtaining request message to the first base station, where the obtaining request message includes second indication information;
the receiving unit is further configured to: receive an obtaining response message sent by the first base station when the first base station determines, according to the second indication information, that the terminal is allowed to perform a forward handover, where the obtaining response message includes context information of the terminal; and
the processing unit is specifically configured to trigger, according to the context information of the terminal received by the receiving unit, the sending unit to send the forward handover command message to the terminal.

With reference to the third aspect, in a third possible implementation manner of the third aspect, the forward handover request message includes the first indication information;
the processing unit is specifically configured to trigger, according to the forward handover request message, the sending unit to send an obtaining request message to the first base station;
the receiving unit is further configured to receive an obtaining response message sent by the first base station according to the obtaining request message, where the obtaining response message includes context information of the terminal and the third indication information; and
the processing unit is specifically configured to: when determining, according to the third indication information included by the obtaining response message received by the receiving unit and the first indication information included by the forward handover request message received by the receiving unit, that the terminal is allowed to perform a forward handover, trigger the sending unit to send the forward handover command message to the terminal.

With reference to the first, second, or third possible implementation manner of the third aspect, in a fourth possible implementation manner of the third aspect, when triggering, according to the forward handover request message, the sending unit to send the obtaining request message to the first base station, the processing unit is specifically configured to:
when determining that the forward handover request message includes the first indication information, trigger the sending unit to send the obtaining request message to the first base station; or
trigger, according to the first indication information included by the forward handover request message and the third indication information that is pre-obtained from the first base station, the sending unit to send the obtaining request message to the first base station.

According to a fourth aspect, an embodiment of the present invention provides a handover system, including a first base station and a second base station, where
the first base station is configured to obtain first indication information, and send the first indication information to a terminal, where the first indication information is used to indicate that the terminal is allowed to perform a forward handover; and
the second base station is configured to receive a forward handover request message sent by the terminal according to the first indication information, and send a forward handover command message to the terminal according to the forward handover request message, so that the terminal performs a forward handover from the first base station to the second base station according to the forward handover command message.

According to a fifth aspect, an embodiment of the present invention provides a handover method, including:
obtaining, by a first base station, first indication information, where the first indication information is used to indicate that a terminal is allowed to perform a forward handover; and
sending, by the first base station, the first indication information to the terminal, so that the terminal sends a forward handover request message to a second base station according to the first indication information, receives a forward handover command message sent by the second base station according to the forward handover request message, and performs a forward handover from the first base station to the second base station according to the forward handover command message.

In a first possible implementation manner of the fifth aspect, the first indication information includes an identifier for allowing a terminal to perform a forward handover or configuration information for allowing a terminal to perform a forward handover, where
the configuration information for allowing a terminal to perform a forward handover includes at least one piece of the following information: indication information for allowing a terminal to perform an earlier RLF, condition information for allowing a terminal to perform a forward handover, cell information that is included by the second base station and for allowing a terminal to perform a forward handover, shortMAC-I used by a terminal to perform a forward handover, or terminal information for allowing a terminal to perform a forward handover.

With reference to the fifth aspect or the first possible implementation manner of the fifth aspect, in a second possible implementation manner of the fifth aspect, the method further includes:
sending, by the first base station, related information about a forward handover to the second base station, so that the second base station sends the forward handover command message to the terminal according to the forward handover request message and the related information about a forward handover, where the related information about a forward handover includes at least one piece of the following information: indication information used to indicate that a terminal accessing the first base station is allowed to perform a forward handover, condition indication information used to indicate that a terminal accessing the first base station is allowed to perform a forward handover, an identifier of a terminal that is in a terminal accessing the first base station and that is allowed to perform a forward handover, or context information of a terminal that is in a terminal accessing the first base station and that is allowed to perform a forward handover.

According to a sixth aspect, an embodiment of the present invention provides a handover method, including:
receiving, by a terminal, first indication information sent by a first base station, where the first indication information is used to indicate that the terminal is allowed to perform a forward handover;
sending, by the terminal, a forward handover request message to a second base station according to the first indication information;
receiving, by the terminal, a forward handover command message sent by the second base station according to the forward handover request message; and
performing, by the terminal, a forward handover from the first base station to the second base station according to the forward handover command message.

In a first possible implementation manner of the sixth aspect, the first indication information includes an identifier for allowing a terminal to perform a forward handover or configuration information for allowing a terminal to perform a forward handover, where
the configuration information for allowing a terminal to perform a forward handover includes at least one piece of the following information: indication information for allowing a terminal to perform an earlier RLF, condition information for allowing a terminal to perform a forward handover, cell information that is included by the second base station and for allowing a terminal to perform a forward handover, shortMAC-I used by a terminal to perform a forward handover, or terminal information for allowing a terminal to perform a forward handover.

With reference to the sixth aspect or the first possible implementation manner of the sixth aspect, in a second possible implementation manner of the sixth aspect, the first indication information includes the cell information that is included by the second base station and for allowing a terminal to perform a forward handover, or the sending, by the terminal, a forward handover request message to a second base station according to the first indication information includes:
obtaining, by the terminal, information about a target cell; and
sending the forward handover request message to the second base station when the terminal determines that the cell information that is included by the second base station and for allowing a terminal to perform a forward handover includes the information about the target cell.

According to a seventh aspect, an embodiment of the present invention provides a handover method, including:
receiving, by a second base station, a forward handover request message sent by a terminal, where the forward handover request message is sent by the terminal according to first indication information sent by a first base station, and the first indication information is used to indicate that the terminal is allowed to perform a forward handover; and
sending, by the second base station, a forward handover command message to the terminal according to the forward handover request message, so that the terminal performs a forward handover from the first base station to the target second base station according to the forward handover command message.

In a first possible implementation manner of the seventh aspect, the sending, by the second base station, a forward handover command message to the terminal according to the forward handover request message includes:
sending, by the second base station, an obtaining request message to the first base station according to the forward handover request message;
receiving, by the second base station, an obtaining response message sent by the first base station according to the obtaining request message, where the obtaining response message includes context information of the terminal; and
sending, by the second base station, the forward handover command message to the terminal according to the context information of the terminal.

With reference to the seventh aspect, in a second possible implementation manner of the seventh aspect, the sending, by the second base station, a forward handover command message to the terminal according to the forward handover request message includes:
sending, by the second base station, an obtaining request message to the first base station according to the forward handover request message, where the obtaining request message includes second indication information;
receiving, by the second base station, an obtaining response message sent by the first base station when the first base station determines, according to the second indication information, that the terminal is allowed to perform a forward handover, where the obtaining response message includes context information of the terminal; and
sending, by the second base station, the forward handover command message to the terminal according to the context information of the terminal.

With reference to the seventh aspect, in a third possible implementation manner of the seventh aspect, the forward handover request message includes the first indication information, and the sending, by the second base station, a forward handover command message to the terminal according to the forward handover request message includes:
sending, by the second base station, an obtaining request message to the first base station according to the forward handover request message;
receiving, by the second base station, an obtaining response message sent by the first base station according to the obtaining request message, where the obtaining response message includes context information of the terminal and the third indication information; and
sending, by the second base station, the forward handover command message to the terminal when determining, according to the third indication information included by the obtaining response message and the first indication information included by the forward handover request message, that the terminal is allowed to perform a forward handover.

With reference to the first, second, or third possible implementation manner of the seventh aspect, in a fourth possible implementation manner of the seventh aspect, the sending, by the second base station, an obtaining request message to the first base station according to the forward handover request message includes:
sending, by the second base station, the obtaining request message to the first base station when determining that the forward handover request message includes the first indication information; or
sending, by the second base station, the obtaining request message to the first base station according to the first indication information included by the forward handover request message and the third indication information that is pre-obtained from the first base station.

According to the foregoing technical solution, whether a terminal can perform a forward handover is controlled by a first base station. When the terminal initiates a forward handover request to a second base station, the second base station controls, by using a forward handover command message, whether the terminal can perform a forward handover. Therefore, the first base station and the second base station can effectively control a forward handover process of the terminal, which improves control by the first base station and the second base station over the forward handover process of the terminal, and enhances performance of an overall wireless communications system.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a functional block diagram of a first base station according to an embodiment of the present invention;
FIG. 2 is a schematic structural diagram of a first base station according to an embodiment of the present invention;
FIG. 3 is a functional block diagram of a terminal according to an embodiment of the present invention;
FIG. 4 is a schematic structural diagram of a terminal according to an embodiment of the present invention;
FIG. 5 is a functional block diagram of a second base station according to an embodiment of the present invention;
FIG. 6 is a schematic structural diagram of a second base station according to an embodiment of the present invention;
FIG. 7 is a functional block diagram of a handover system according to an embodiment of the present invention;
FIG. 8 is a schematic flowchart of a first embodiment of a handover method according to an embodiment of the present invention;
FIG. 9 is a schematic flowchart of a second embodiment of a handover method according to an embodiment of the present invention;
FIG. 10 is a schematic flowchart of a third embodiment of a handover method according to an embodiment of the present invention; and
FIG. 11 (a) and FIG. 11(b) are schematic diagrams of an LI field according to an embodiment of the present invention.

### DESCRIPTION OF EMBODIMENTS

To make the technical solutions in the present invention more comprehensible, the following describes the embodiments of the present invention in detail with reference to the accompanying drawings.

It should be clear that the described embodiments are merely a part rather than all of the embodiments of the present invention. All other embodiments obtained by a person of ordinary skill in the art based on the embodiments of the present invention without creative efforts shall fall within the protection scope of the present invention.

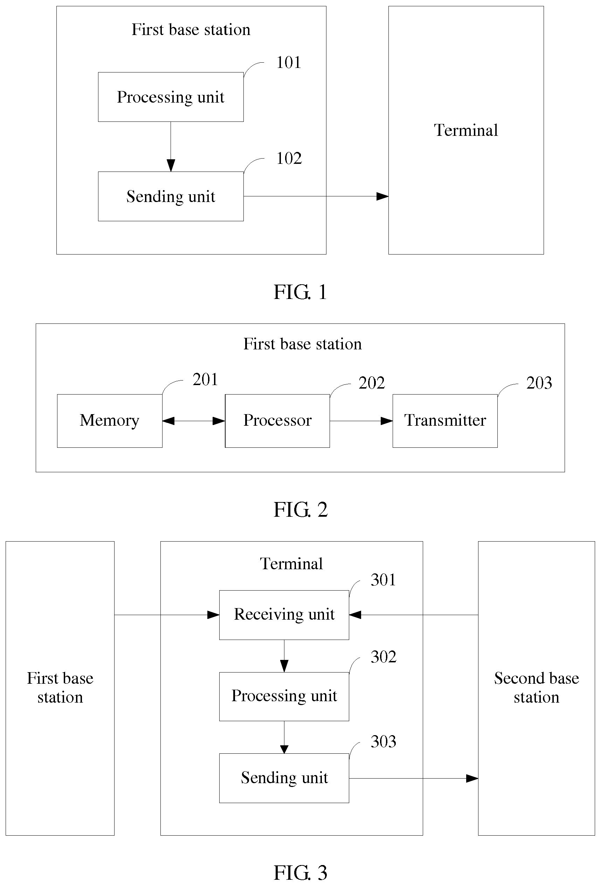

An embodiment of the present invention provides a base station. Referring to FIG. 1, FIG. 1 is a functional block diagram of a first base station according to an embodiment of the present invention. As shown in FIG. 1, the first base station includes:
a processing unit 101, configured to obtain first indication information, where the first indication information is used to indicate that a terminal is allowed to perform a forward handover; and
a sending unit 102, configured to send the first indication information obtained by the processing unit 101 to the terminal, so that the terminal sends a forward handover request message to a second base station according to the first indication information, receives a forward handover command message sent by the second base station according to the forward handover request message, and performs a forward handover from the first base station to the second base station according to the forward handover command message.

In this embodiment of the present invention, the first indication information includes an identifier for allowing a terminal to perform a forward handover or configuration information for allowing a terminal to perform a forward handover.

The identifier for allowing a terminal to perform a forward handover is equivalent to explicit indication information and may directly indicate whether a terminal is allowed to perform a forward handover or not. For example, bit 1 may be used as the first indication information and is used to indicate that a terminal is allowed to perform a forward handover; or bit 0 may be used as the first indication information and is used to indicate that a terminal is not allowed to perform a forward handover. For another example, a random number or the like may be used as the first indication information.

The configuration information for allowing a terminal to perform a forward handover is equivalent to implicit indication information and may indirectly indicate whether a terminal is allowed to perform a forward handover or not. The configuration information for allowing a terminal to perform a forward handover includes at least one piece of the following information: indication information for allowing a terminal to perform an earlier radio link failure (Earlier Radio Link Failure, Earlier RLF), condition information for allowing a terminal to perform a forward handover, cell information that is included by the second base station and for allowing a terminal to perform a forward handover, short message authentication code for integrity (Short Message Authentication Code for Integrity, shortMAC-I) used by a terminal to perform a forward handover, or terminal information for allowing a terminal to perform a forward handover. For example, the indication information for allowing a terminal to perform an earlier RLF may be configuring of duration of a T310b timer. If the duration of the T310b timer is configured, it indicates that a terminal is allowed to perform an earlier RLF. For another example, the terminal information for allowing a terminal to perform a forward handover may be an identifier of a terminal, where the identifier of the terminal may include at least one of the following identifiers: a cell radio network temporary identifier (Cell Radio Network Temporary Identifier, C-RNTI), a system architecture evolution (System Architecture Evolution, SAE) temporary mobile station identifier (Temporary Mobile Station Identifier, S-TMSI), an international mobile subscriber identity (International Mobile Subscriber Identity, IMSI), and an international mobile equipment identity (International Mobile Equipment Identity, IMEI). Alternatively, the terminal information for allowing a terminal to perform a forward handover may be a random number, or the like. A different piece of terminal information for allowing a terminal to perform a forward handover may be configured for each terminal, and same terminal information for allowing a terminal to perform a forward handover may be configured for a group of terminals. It should be noted that the foregoing first indication information may be sent to the terminal in a broadcast manner or a unicast manner, and therefore the terminal information for allowing a terminal to perform a forward handover may include at least one piece of terminal information, where a terminal corresponding to the terminal information is a terminal that is allowed to perform a forward handover.

For example, the condition information for allowing a terminal to perform a forward handover may include at least one piece of the following information: when an RLF occurs on a terminal, when a terminal performs an earlier RLF, when a terminal triggers measurement reporting, when a terminal generates a measurement report, and when a terminal fails to be handed over. For example, when a terminal triggers measurement reporting or when a terminal generates a measurement report, signal quality measurement or signal strength measurement may be performed for the terminal; and when a measurement result meets a preset condition, the terminal needs to trigger itself to perform measurement reporting, or the terminal triggers itself to generate a measurement report.

For example, the cell information that is included by the second base station and for allowing a terminal to perform a forward handover includes an identifier of at least one cell. The identifier of the cell may be a physical cell identifier (Physical Cell Identifier, PCI), or may be an E-UTRAN cell global identifier (E-UTRAN Cell Global Identifier, ECGI).

In this embodiment of the present invention, a method used by the first base station to send the first indication information to the terminal may be: sending the first indication information to the terminal by using a system broadcast message; sending the first indication information to the terminal by using a dedicated radio resource control protocol (Radio Resource Control, RRC) message, where the dedicated RRC message may be an RRC connection reconfiguration message, an RRC connection establishment message, an RRC connection reestablishment message, or the like; or sending the first indication information to the terminal by using a newly defined message, which is not limited in this embodiment of the present invention.

In this embodiment of the present invention, the second base station may include at least one base station.

In the foregoing first base station, the sending unit 102 is further configured to:
send related information about a forward handover to the second base station, so that the second base station sends the forward handover command message to the terminal according to the forward handover request message and the related information about a forward handover, where the related information about a forward handover includes at least one piece of the following information: indication information used to indicate that a terminal accessing the first base station is allowed to perform a forward handover, condition indication information used to indicate that a terminal accessing the first base station is allowed to perform a forward handover, an identifier of a terminal that is in a terminal accessing the first base station and that is allowed to perform a forward handover, or context information of a terminal that is in a terminal accessing the first base station and that is allowed to perform a forward handover.

The indication information used to indicate that a terminal accessing the first base station is allowed to perform a forward handover indicates that all terminals accessing the first base station are allowed to perform a forward handover. The identifier of a terminal that is in a terminal accessing the first base station and that is allowed to perform a forward handover indicates which terminals, among terminals accessing the first base station, are allowed to perform a forward handover. The context information of a terminal that is in a terminal accessing the first base station and that is allowed to perform a forward handover indicates that the first base station directly sends the second base station the context information of the terminal allowed to perform a forward handover.

In this embodiment of the present invention, a method used by the first base station to send configuration information to the second base station may be sending the configuration information to the second base station by using a handover preparation request message, or may be sending the configuration information to the second base station by using another X2 interface message or an S1 interface message, which is not limited in this embodiment of the present invention.

For example, a method used by the sending unit 102 to send the related information about a forward handover to the second base station may include: sending the related information about a forward handover to the second base station before the first indication information is sent to the terminal; sending the related information about a forward handover to the second base station when the first base station sends the first indication information to the terminal; or sending the related information about a forward handover to the second base station after the first indication information is sent to the terminal.

Referring to FIG. 2, FIG. 2 is a schematic structural diagram of a first base station according to an embodiment of the present invention. As shown in FIG. 2, the first base station includes:
a memory 201, configured to store information including a program routine;
a processor 202, separately coupled to the memory 201 and a transmitter 203 and configured to control execution of the program routine, which specifically includes: obtaining first indication information, where the first indication information is used to indicate that a terminal is allowed to perform a forward handover; and
the transmitter 203, configured to send the first indication information obtained by the processor 202 to the terminal, so that the terminal sends a forward handover request message to a second base station according to the first indication information, receives a forward handover command message sent by the second base station according to the forward handover request message, and performs a forward handover from the first base station to the second base station according to the forward handover command message.

An embodiment of the present invention provides a terminal. Referring to FIG. 3, FIG. 3 is a functional block diagram of a terminal according to an embodiment of the present invention. As shown in FIG. 3, the terminal includes:
a receiving unit 301, configured to receive first indication information sent by a first base station, where the first indication information is used to indicate that the terminal is allowed to perform a forward handover; and
a processing unit 302, configured to trigger, according to the first indication information received by the receiving unit 301, a sending unit 303 to send a forward handover request message to a second base station, where
the receiving unit 301 is further configured to receive a forward handover command message sent by the second base station according to the forward handover request message; and
the processing unit 302 is further configured to perform a forward handover from the first base station to the second base station according to the forward handover command message received by the receiving unit 301.

The first indication information includes an identifier for allowing a terminal to perform a forward handover or configuration information for allowing a terminal to perform a forward handover.

The configuration information for allowing a terminal to perform a forward handover includes at least one piece of the following information: indication information for allowing a terminal to perform an earlier RLF, condition information for allowing a terminal to perform a forward handover, cell information that is included by the second base station and for allowing a terminal to perform a forward handover, shortMAC-I used by a terminal to perform a forward handover, or terminal information for allowing a terminal to perform a forward handover.

That the processing unit 302 triggers, according to the first indication information received by the receiving unit, the sending unit to send the forward handover request message to the second base station is specifically: when determining, according to the first indication information received by the receiving unit 301, to initiate a forward handover, triggering the sending unit 303 to send the forward handover request message to the second base station, where the forward handover request message includes the indication information.

For example, the terminal determines, according to the first indication information such as the identifier for allowing a terminal to perform a forward handover or the condition information for allowing a terminal to perform a forward handover, whether to initiate a forward handover, or if the terminal meets a condition for a forward handover, the terminal may determine to initiate a forward handover, so that the terminal can send, according to the cell information that is included by the second base station and for allowing a terminal to perform a forward handover, the forward handover request message to the second base station to which the cell belongs, where the forward handover request message may include a part or all of the first indication information received by the terminal. The forward handover request message may be implemented by using an RRC reestablishment request message, or may be implemented by using a newly defined message, which is not limited in this embodiment of the present invention.

For example, when the forward handover request message is implemented by using the RRC reestablishment request message, a cause value is added into the RRC reestablishment request message, where the cause value is used as the first indication information; an idle bit in the RRC reestablishment request message is used to bear indication information; or a new information element is added into the RRC reestablishment request message, where the information element is used to bear indication information, which is not limited in this embodiment of the present invention.

Alternatively, the first indication information includes the cell information that is included by the second base station and for allowing a terminal to perform a forward handover. That when determining, according to the first indication information, to initiate a forward handover, the processing unit 302 triggers the sending unit 303 to send the forward handover request message to the second base station is specifically: The terminal obtains information about a target cell, where the information about the target cell may include at least one piece of cell information; the terminal determines whether the cell information that is included by the second base station and for allowing a terminal to perform a forward handover includes the information about the target cell; and if determining that the cell information that is included by the second base station and for allowing a terminal to perform a forward handover includes the information about the target cell, the terminal determines to initiate a forward handover, or then triggers the sending unit 303 to send the forward handover request message to the second base station; or if determining that the cell information that is included by the second base station and for allowing a terminal to perform a forward handover does not include the information about the target cell, the terminal determines not to initiate a forward handover. That is, the terminal needs to perform a cell selection or cell reselection process before initiating a forward handover request, so as to select a proper cell. If the terminal selects a proper cell, the terminal determines, according to the first indication information, whether the selected cell falls within a cell range indicated.

In this embodiment of the present invention, for the terminal, the second base station and the first base station may be a same base station, and a cell included by the second base station is a cell included by the first base station. If the second base station and the first base station are a same base station, no interaction is performed between the first base station and the second base station in all embodiments of the present invention. Therefore, if the first base station and the second base station are a same base station, that the terminal performs the forward handover from the first base station to the second base station according to the forward handover command message means that the terminal is forward handed over from a cell of the first base station to another cell of the first base station. If the first base station and the second base station are different base stations, that the terminal performs the forward handover from the first base station to the second base station according to the forward handover command message means that the terminal is forward handed over from the first base station to the second base station.

It should be noted that for the terminal, the terminal may learn, according to a base station identifier, which base station is the first base station and which is the second base station; or the terminal only needs to know cell information without needing to know which base station is the first base station and which is the second base station. Therefore, for the terminal, being handed over from a cell of the first base station to a cell of the second base station is the same as being handed over from a cell of the first base station to another cell of the first base station. The terminal knows only that the terminal is forward handed over from one cell to another cell, and does not care whether the two cells belong to a same base station.

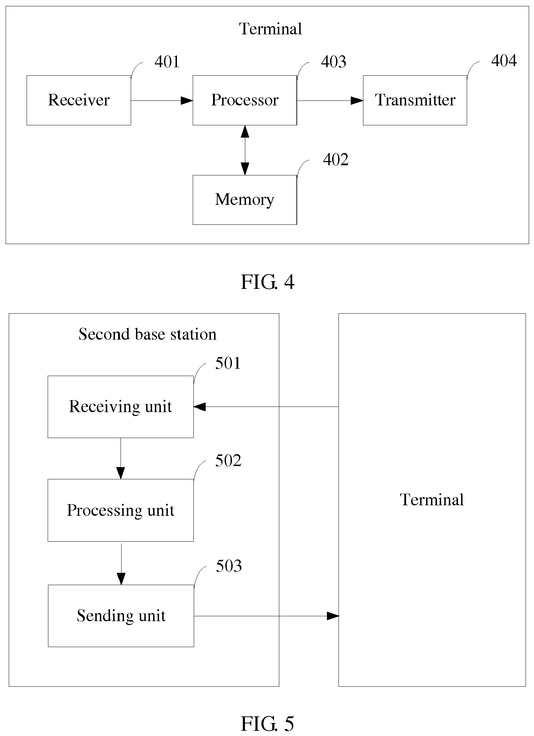

Referring to FIG. 4, FIG. 4 is a schematic structural diagram of a terminal according to an embodiment of the present invention. As shown in FIG. 4, the terminal includes:
a receiver 401, configured to receive first indication information sent by a first base station, where the first indication information is used to indicate that the terminal is allowed to perform a forward handover;
a memory 402, configured to store information including a program routine; and
a processor 403, separately coupled to the receiver 401, the memory 402, and a transmitter 404, and configured to control execution of the program routine, which specifically includes: triggering, according to the first indication information received by the receiving unit, the transmitter 404 to send a forward handover request message to a second base station, where
the receiver 401 is further configured to receive a forward handover command message sent by the second base station according to the forward handover request message; and
that the processor 403 is configured to control execution of the program routine specifically includes: performing, according to the forward handover command message received by the receiver 401, a forward handover from the first base station to the second base station.

An embodiment of the present invention provides a base station. Referring to FIG. 5, FIG. 5 is a functional block diagram of a second base station according to an embodiment of the present invention. As shown in FIG. 5, the second base station includes:
a receiving unit 501, configured to receive a forward handover request message sent by a terminal, where the forward handover request message is sent by the terminal according to first indication information sent by a first base station, and the first indication information is used to indicate that the terminal is allowed to perform a forward handover; and
a processing unit 502, configured to trigger, according to the forward handover request message received by the receiving unit 501, a sending unit 503 to send a forward handover command message to the terminal, so that the terminal performs a forward handover from the first base station to the target second base station according to the forward handover command message.

The processing unit 502 is specifically configured to trigger, according to the forward handover request message received by the receiving unit 501, the sending unit 503 to send an obtaining request message to the first base station;
the receiving unit 501 is further configured to receive an obtaining response message sent by the first base station according to the obtaining request message, where the obtaining response message includes context information of the terminal; and
the processing unit 502 is specifically configured to trigger, according to the context information of the terminal received by the receiving unit 501, the sending unit 503 to send the forward handover command message to the terminal.

Alternatively, the processing unit 502 is specifically configured to trigger, according to the forward handover request message, the sending unit 503 to send an obtaining request message to the first base station, where the obtaining request message includes second indication information;
the receiving unit 501 is further configured to: receive an obtaining response message sent by the first base station when the first base station determines, according to the second indication information, that the terminal is allowed to perform a forward handover, where the obtaining response message includes context information of the terminal; and
the processing unit 502 is specifically configured to trigger, according to the context information of the terminal received by the receiving unit 501, the sending unit 503 to send the forward handover command message to the terminal.

Specifically, after receiving the obtaining request message, the first base station determines, according to the second indication information included by the obtaining request message, whether the forward handover of the terminal is allowed, and then determines, according to a determining result, whether to send the obtaining response message to the second base station. For example, the first base station determines whether the second indication information included by the obtaining request message is consistent with the first indication information sent by the first base station to the terminal before. If the second indication information is consistent with the first indication information, the first base station determines that the forward handover of the terminal is allowed, and the first base station sends the obtaining response message to the second base station, where the obtaining response message includes the context information of the terminal; or if the second indication information is inconsistent with the first indication information, the first base station determines that the forward handover of the terminal is not allowed, and the first base station does not send the obtaining response message to the second base station, or the first base station sends an obtaining failure message to the second base station.

Alternatively, the forward handover request message includes the first indication information, and the processing unit 502 is specifically configured to trigger, according to the forward handover request message, the sending unit 503 to send the obtaining request message to the first base station;
the receiving unit 501 is further configured to receive an obtaining response message sent by the first base station according to the obtaining request message, where the obtaining response message includes context information of the terminal and the third indication information; and
the processing unit 502 is specifically configured to: when determining, according to the third indication information included by the obtaining response message received by the receiving unit 501 and the first indication information included by the forward handover request message received by the receiving unit 501, that the terminal is allowed to perform a forward handover, trigger the sending unit 503 to send the forward handover command message to the terminal.

Specifically, after receiving the obtaining request message, the first base station directly sends the obtaining response message to the second base station without determining whether the forward handover of the terminal is allowed, where the obtaining response message includes the context information of the terminal and the second indication information, and the second indication information is a part or all of the first indication information. The obtaining response message may include a handover preparation request message or a handover preparation completion message, which is not limited in this embodiment of the present invention.

After receiving the obtaining response message, the second base station determines, according to the third indication information in the obtaining response message, whether the forward handover of the terminal is allowed, and then determines, according to a determining result, whether to send the forward handover command message to the terminal. For example, the second base station determines whether the third indication message in the obtaining response message is consistent with the first indication information in the forward handover request message sent by the terminal. If the third indication information is consistent with the first indication information, the second base station determines that the forward handover of the terminal is allowed, and the second base station sends the forward handover command message to the terminal; or if the third indication information is inconsistent with the first indication information, the second base station determines that the forward handover of the terminal is not allowed, and the second base station does not send the forward handover command message to the terminal, or sends a forward handover failure message to the terminal. The forward handover failure message may include an RRC connection reestablishment refusal message, an RRC connection establishment refusal message, a newly defined RRC message, or another existing RRC message, which is not limited in this embodiment of the present invention.

In this embodiment of the present invention, after receiving the obtaining response message sent by the first base station, the second base station sends the forward handover command message to the terminal according to the context information of the terminal in the obtaining response message, where the forward handover command message may be implemented by using an RRC connection reestablishment message, an RRC connection establishment message, or a newly defined message or another existing RRC message, which is not limited in this embodiment of the present invention. The forward handover command message may include configuration information of a signaling radio bearer, configuration information of a data radio bearer, physical resource configuration information, a MAC layer parameter configuration information, or the like that is of the terminal.

When triggering, according to the forward handover request message, the sending unit 503 to send the obtaining request message to the first base station, the processing unit 502 is specifically configured to:
determine whether the forward handover request message includes the first indication information, and if determining that the forward handover request message includes the first indication information, trigger the sending unit 503 to send the obtaining request message to the first base station; or
trigger, according to the first indication information included by the forward handover request message and the third indication information that is pre-obtained from the first base station, the sending unit 503 to send the obtaining request message to the first base station.

Specifically, after receiving the forward handover request message, the second base station first determines whether the context information of the terminal exists locally, and if the context information of the terminal exists locally, the second base station may not send the obtaining request message to the first base station; or if the context information of the terminal does not exist locally, the second base station may obtain information about the first base station according to information in the forward handover request message, and send the obtaining request message to the first base station according to the information about the first base station, so as to obtain the context information of the terminal from the first base station.

The obtaining request message may include an identifier of the terminal, where the identifier of the terminal may be an identifier allocated by the first base station to the terminal, such as a cell radio network temporary identifier (Cell Radio Network Temporary Identifier, C-RNTI).

In addition, the obtaining request message may include the second indication information, where the second indication information may be a part or all of the first indication information.

The second base station may determine whether the forward handover request message includes the first indication information; and if the forward handover request message includes the first indication information, the second base station sends the obtaining request message to the first base station, so as to obtain the context information of the terminal; or if the forward handover request message does not include the first indication information, the second base station may send a reestablishment refusal message to the terminal instead of sending the obtaining request message to the first base station. Alternatively, the second base station determines, according to the first indication information included by the forward handover request message and the third indication information that is pre-obtained from the first base station, whether the two pieces of indication information are consistent; and if the two pieces of indication information are consistent, the second base station sends the obtaining request message to the first base station; or if the two pieces of indication information are inconsistent, the second base station sends a reestablishment refusal message to the terminal instead of sending the obtaining request message to the first base station.

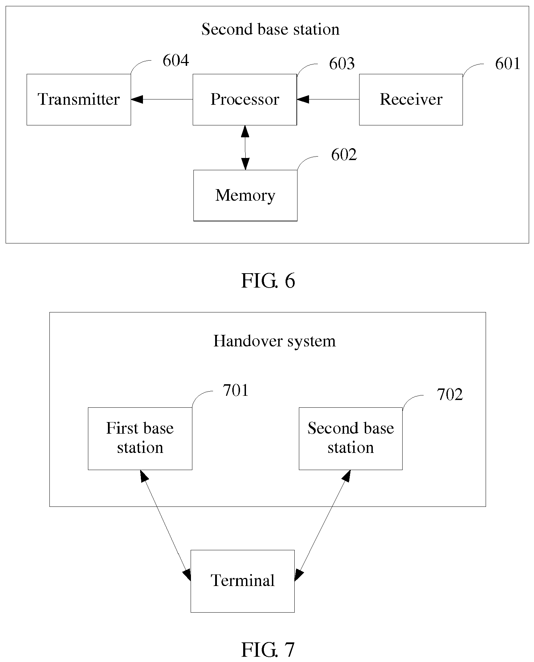

Referring to FIG. 6, FIG. 6 is a schematic structural diagram of a second base station according to an embodiment of the present invention. As shown in FIG. 6, the second base station includes:
a receiver 601, configured to receive a forward handover request message sent by a terminal, where the forward handover request message is sent by the terminal according to first indication information sent by a first base station, and the first indication information is used to indicate that the terminal is allowed to perform a forward handover;
a memory 602, configured to store information including a program routine; and
a processor 603, separately coupled to the memory 602, the receiver 601, and a transmitter 604, and configured to control execution of the program routine, which specifically includes: triggering, according to the forward handover request message received by the receiver 601, the transmitter 604 to send a forward handover command message to the terminal, so that the terminal performs a forward handover from the first base station to the target second base station according to the forward handover command message.

An embodiment of the present invention provides a handover system. Referring to FIG. 7, FIG. 7 is a functional block diagram of a handover system according to an embodiment of the present invention. As shown in FIG. 7, the system includes a first base station 701 and a second base station 702, where
the first base station 701 is configured to obtain first indication information, and send the first indication information to a terminal, where the first indication information is used to indicate that the terminal is allowed to perform a forward handover; and
the second base station 702 is configured to receive a forward handover request message sent by the terminal according to the first indication information, and send a forward handover command message to the terminal according to the forward handover request message, so that the terminal performs a forward handover from the first base station to the second base station according to the forward handover command message.

The embodiments of the present invention further provide method embodiments that implement all units in the foregoing apparatus embodiments.

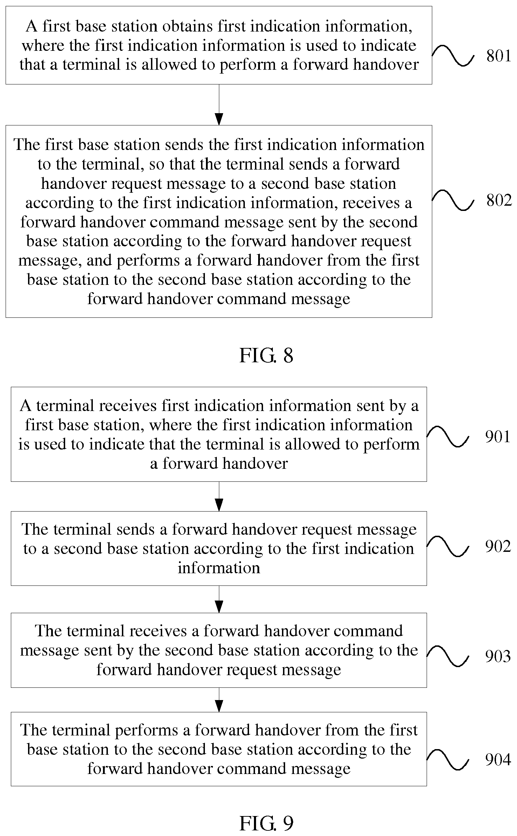

Referring to FIG. 8, FIG. 8 is a schematic flowchart of a first embodiment of a handover method according to an embodiment of the present invention. As shown in FIG. 8, the method includes the following steps:

Step 801: A first base station obtains first indication information, where the first indication information is used to indicate that a terminal is allowed to perform a forward handover.

Specifically, a method used by the first base station to obtain the first indication information may be that the first base station obtains pre-configured first indication information, the first base station obtains first indication information sent by another entity such as operation-administration-maintenance (Operation Administration and Maintenance, OAM), or the first base station generates the first indication information immediately, and the method used by the first base station to obtain the first indication information is not limited in this embodiment of the present invention.

In this embodiment of the present invention, the first indication information may include an identifier for allowing a terminal to perform a forward handover or configuration information for allowing a terminal to perform a forward handover.

For example, the configuration information for allowing a terminal to perform a forward handover includes at least one piece of the following information: indication information for allowing a terminal to perform an earlier RLF, condition information for allowing a terminal to perform a forward handover, cell information that is included by a second base station and for allowing a terminal to perform a forward handover, shortMAC-I used by a terminal to perform a forward handover, or terminal information for allowing a terminal to perform a forward handover.

Step 802: The first base station sends the first indication information to the terminal, so that the terminal sends a forward handover request message to a second base station according to the first indication information, receives a forward handover command message sent by the second base station according to the forward handover request message, and performs a forward handover from the first base station to the second base station according to the forward handover command message.

The foregoing method may further include: The first base station sends related information about a forward handover to the second base station, so that the second base station sends the forward handover command message to the terminal according to the forward handover request message and the related information about a forward handover, where the related information about a forward handover includes at least one piece of the following information: indication information used to indicate that a terminal accessing the first base station is allowed to perform a forward handover, condition indication information used to indicate that a terminal accessing the first base station is allowed to perform a forward handover, an identifier of a terminal that is in a terminal accessing the first base station and that is allowed to perform a forward handover, or context information of a terminal that is in a terminal accessing the first base station and that is allowed to perform a forward handover.

For example, a method used by the first base station to send the related information about a forward handover to the second base station may include: The first base station sends the related information about a forward handover to the second base station before sending the first indication information to the terminal; the first base station sends the related information about a forward handover to the second base station when sending the first indication information to the terminal; or the first base station sends the related information about a forward handover to the second base station after sending the first indication information to the terminal, so that the second base station sends the forward handover command message to the terminal according to the forward handover request message and the related information about a forward handover.

Referring to FIG. 9, FIG. 9 is a schematic flowchart of a second embodiment of a handover method according to an embodiment of the present invention. As shown in FIG. 9, the method includes the following steps:
Step 901: A terminal receives first indication information sent by a first base station, where the first indication information is used to indicate that the terminal is allowed to perform a forward handover.

Specifically, the terminal receives the first indication information sent by the first base station, where the first indication information is used to indicate that the terminal is allowed to perform a forward handover.

In this embodiment of the present invention, the first indication information includes an identifier for allowing a terminal to perform a forward handover or configuration information for allowing a terminal to perform a forward handover.

For example, the configuration information for allowing a terminal to perform a forward handover includes at least one piece of the following information: indication information for allowing a terminal to perform an earlier RLF, condition information for allowing a terminal to perform a forward handover, cell information that is included by a second base station and for allowing a terminal to perform a forward handover, shortMAC-I used by a terminal to perform a forward handover, or terminal information for allowing a terminal to perform a forward handover.

Step 902: The terminal sends a forward handover request message to a second base station according to the first indication information.

Specifically, the terminal determines, according to the first indication information, whether to initiate a forward handover. If the terminal determines to initiate a forward handover, the terminal sends the forward handover request message to the second base station, where the forward handover request message includes the first indication information, so that the second base station sends the forward handover command message to the terminal according to the first indication information.

For example, when the first indication information includes the cell information that is included by the second base station and for allowing a terminal to perform a forward handover, a method used by the terminal to determine, according to the first indication information, whether to initiate a forward handover may be: First, the terminal obtains a target cell; then the terminal determines whether the cell information that is included by the second base station and for allowing a terminal to perform a forward handover includes information about the target cell; and if the terminal determines that the cell information that is included by the second base station and for allowing a terminal to perform a forward handover includes the information about the target cell, the terminal determines to initiate a forward handover, or sends the forward handover request message to the second base station; otherwise, if the terminal determines that the cell information that is included by the second base station and for allowing a terminal to perform a forward handover does not include the information about the target cell, the terminal determines not to initiate a forward handover.

Step 903: The terminal receives a forward handover command message sent by the second base station according to the forward handover request message.

Step 904: The terminal performs a forward handover from the first base station to the second base station according to the forward handover command message.

Specifically, after receiving the forward handover command message, the terminal may perform the forward handover from the first base station to the second base station.

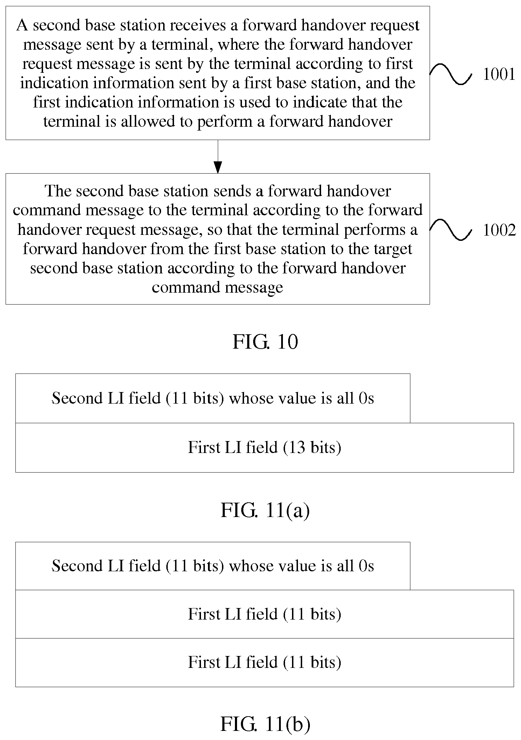

Referring to FIG. 10, FIG. 10 is a schematic flowchart of a third embodiment of a handover method according to an embodiment of the present invention. As shown in FIG. 10, the method includes the following steps:
Step 1001: A second base station receives a forward handover request message sent by a terminal, where the forward handover request message is sent by the terminal according to first indication information sent by a first base station, and the first indication information is used to indicate that the terminal is allowed to perform a forward handover.
Step 1002: The second base station sends a forward handover command message to the terminal according to the forward handover request message, so that the terminal performs a forward handover from the first base station to the target second base station according to the forward handover command message.

Specifically, in this embodiment of the present invention, methods used by the second base station to send the forward handover command message to the terminal according to the forward handover request message may include the following three types:
Type 1: The second base station sends an obtaining request message to the first base station according to the forward handover request message; the second base station receives an obtaining response message sent by the first base station according to the obtaining request message, where the obtaining response message includes context information of the terminal; and the second base station sends the forward handover command message to the terminal according to the context information of the terminal.
Type 2: The second base station sends an obtaining request message to the first base station according to the forward handover request message, where the obtaining request message includes second indication information; the second base station receives an obtaining response message sent by the first base station when the first base station determines, according to the second indication information, that the terminal is allowed to perform a forward handover, where the obtaining response message includes context information of the terminal; and the second base station sends the forward handover command message to the terminal according to the context information of the terminal.
Type 3: When the forward handover request message includes the first indication information, the second base station sends an obtaining request message to the first base station according to the forward handover request message; the second base station receives an obtaining response message sent by the first base station according to the obtaining request message, where the obtaining response message includes context information of the terminal and the third indication information; and the second base station sends the forward handover command message to the terminal when determining, according to the third indication information included by the obtaining response message and the first indication information included by the forward handover request message, that the terminal is allowed to perform a forward handover.

Methods used by the second base station to send the obtaining request message to the first base station according to the forward handover request message may include the following two types:
Type 1: The second base station determines whether the forward handover request message includes the first indication information; and if the forward handover request message includes the first indication information, the second base station sends the obtaining request message to the first base station.
Type 2: The second base station sends the obtaining request message to the first base station according to the first indication information included by the forward handover request message and the third indication information that is pre-obtained from the first base station.

The technical solutions provided in the embodiments of the present invention have the following beneficial effects:

In the prior art, in an overall process of forward handing over a terminal from a first base station to a second base station, both the source base station and the target base station cannot control a forward handover process of the terminal; instead, the terminal initiates and performs a handover to the target base station. Assuming that load of the target base station is relatively heavy, if the terminal further accesses the target base station, it undoubtedly increases the load of the target base station, which causes load imbalance of a wireless communications system and performance deterioration of the wireless communications system. Compared with the foregoing prior art, in the technical solutions provided in the embodiments of the present invention, whether a terminal can perform a forward handover is controlled by a first base station. When the terminal initiates a forward handover request to a second base station, the second base station controls, by using a forward handover command message, whether the terminal can perform a forward handover. Therefore, the first base station and the second base station can effectively control a forward handover process of the terminal, which improves control by the first base station and the second base station over the forward handover process of the terminal, and enhances performance of the overall wireless communications system.

In an existing LTE or LTE-A system, a radio link control (Radio Link Control, RLC) protocol data unit (Protocol Data Unit, PDU) may be connected in series to multiple RLC service data units (Service Data Unit, SDU), so as to form a large RLC PDU. In this case, a length (which may be represented by bytes) of each RLC SDU may be indicated by using a length indicator (Length Indicator, LI) field, where a length of the LI field is 11 bits. Because the length of the LI field can indicate at most an RLC SDU whose length is 2¹¹-1=2047 bytes, if the length of the RLC SDU is greater than 2047 bytes, the length of the RLC SDU cannot be indicated by using the LI field. Consequently, a quantity of RLC SDUs connected in series to each RLC PDU is limited, and a service rate is also affected. In the prior art, there is a method for resolving the foregoing problem, which is increasing lengths of all LI fields in each RLC PDU. For example, the length of the LI field is increased from 11 bits to 13 bits, so that one LI field can indicate an RLC SDU whose length is 2¹³-1=8191 bytes. However, if lengths of all LI fields in each RLC PDU are increased, unnecessary overheads are caused by using this method because actually not lengths of all RLC SDUs are greater than 2047 bytes.

In view of this, the embodiments of the present invention may provide a length indication method and device, where a length of an RLC SDU connected in series to an RLC PDU can be indicated dynamically by using indication information, which can reduce unnecessary overheads compared with the prior art.

The length indication method may include: A transmit end obtains indication information and M first LI fields, where the indication information is used to indicate that lengths of N RLC SDUs connected in series to an RLC PDU are greater than a preset length threshold, and each first LI field is used to indicate a length of one RLC SDU; and the transmit end sends the indication information and the M first LI fields to a receive end, where M is an integer greater than or equal to 1, and N is an integer less than or equal to M and greater than or equal to 1.

For example, if a length of an RLC SDU connected in series to the RLC PDU exceeds a length that can be indicated by an existing LI field, and the length of the RLC SDU needs to be indicated by the LI field, the transmit end obtains the indication information and the M first LI fields. The indication information may be implemented by using a second LI field, or may be implemented by using a reserved bit field or a newly added field.

For example, if the indication information is implemented by using the second LI field, the indication information may include N second LI fields, where the N second LI fields are used to indicate that a length of an RLC SDU connected in series to the RLC PDU exceeds the preset length threshold. For example, a value of the second LI field may be set to all 0s. Each first LI field may be disposed following a corresponding second LI field, and is used to indicate a length of the RLC SDU. In this way, after obtaining the N second LI fields and the M first LI fields, the receive end learns, according to one second LI field whose value is all 0s, that one first LI field following the second LI field is an LI field that is used to indicate the length of the RLC SDU. Therefore, the length of the RLC SDU can be obtained according to the first LI field.

For example, one RLC PDU may include one second LI field and M first LI fields, where the second LI field is used to indicate that each of lengths of M RLC SDUs connected in series to the RLC PDU exceeds the preset length threshold; or is used to indicate that in the RLC PDU, the M first LI fields, which can indicate that a length of an RLC SDU exceeds the preset length threshold, are used to indicate lengths of M RLC SDUs connected in series to the RLC PDU. Alternatively, one RLC PDU may include N second LI fields and M first LI fields, where N is equal to M. In this way, each second LI field is corresponding to one first LI field, and each second LI field is used to indicate that a length of a corresponding RLC SDU connected in series to the RLC PDU exceeds the preset length threshold. Correspondingly, each first LI field is used to indicate a length of the corresponding RLC SDU.

The transmit end is a base station, and the receive end is a terminal; or the transmit end is a terminal, and the receive end is a base station. The transmit end may send the indication information and at least one first LI field together to the receive end, or may first send the indication information to the receive end and then send at least one first LI field to the receive end.

If the indication information is implemented by using a reserved bit field in an existing RLC PDU, a value of the reserved bit field is set to a specific value such as 0 or 1, so as to indicate that a length of an RLC SDU connected in series to the RLC PDU exceeds the preset length threshold. Alternatively, if the indication information is implemented by using a newly added field in the RLC PDU, a value of the newly added field is set to a specific value such as 0 or 1, so as to indicate that a length of an RLC SDU connected in series to the RLC PDU exceeds the preset length threshold.

A length of the first LI field and/or a length of the second LI field may be pre-specified in a protocol, or may be configured by using a system broadcast message or a dedicated RRC message, which is not limited in this embodiment of the present invention.

Referring to FIG. 11(a) and FIG. 11(b), FIG. 11(a) and FIG. 11(b) are schematic diagrams of an LI field according to an embodiment of the present invention. As shown in FIG. 11(a), a length of a first LI field may be configured as 13 bits used to indicate a length of an RLC SDU. As shown in FIG. 11(b), two first LI fields following a second LI field whose value is set to all 0s jointly indicate the length of the RLC SDU, where a length of each first LI field is 11 bits, and the two first LI fields are 11+11=22 bits in total.

It should be noted that because RLC has a function of segmenting the RLC SDU, this embodiment of the present invention is also applicable in a scenario in which a length of each segment of the RLC SDU is greater than a length that can be indicated by an existing LI field. In addition, in a process in which a transmit end encapsulates at least one RLC SDU into one RLC PDU, a length of each RLC SDU may be indicated according to the foregoing method; and when a receive end decapsulates the RLC PDU into at least one RLC SDU, the length of each RLC SDU may be obtained according to the foregoing method.

Beneficial effects of this embodiment of the present invention are as follows: A transmit end may implement indication of a length of an RLC SDU in a dynamic indication manner, and a manner of increasing an LI field is not used for indicating lengths of all RLC SDUs, which increases a service rate, and reduces unnecessary overheads at the same time.

The foregoing descriptions are merely exemplary embodiments of the present invention, but are not intended to limit the present invention. Any modification, equivalent replacement, or improvement made within the spirit and principle of the present invention should fall within the protection scope of the present invention.

## Claims

1. A base station, wherein the base station is a first base station, and the first base station comprises:
a processing unit, configured to obtain first indication information, wherein the first indication information is used to indicate that a terminal is allowed to perform a forward handover; and
a sending unit, configured to send the first indication information obtained by the processing unit to the terminal, so that the terminal sends a forward handover request message to a second base station according to the first indication information, receives a forward handover command message sent by the second base station according to the forward handover request message, and performs a forward handover from the first base station to the second base station according to the forward handover command message.

2. The base station according to claim 1, wherein:
the first indication information comprises an identifier for allowing a terminal to perform a forward handover or configuration information for allowing a terminal to perform a forward handover, wherein
the configuration information for allowing a terminal to perform a forward handover comprises at least one piece of the following information: indication information for allowing a terminal to perform an earlier radio link failure RLF, condition information for allowing a terminal to perform a forward handover, cell information that is comprised by the second base station and for allowing a terminal to perform a forward handover, short message authentication code for integrity shortMAC-I used by a terminal to perform a forward handover, or terminal information for allowing a terminal to perform a forward handover.

3. The base station according to claim 1 or 2, wherein the sending unit is further configured to:
send related information about a forward handover to the second base station, so that the second base station sends the forward handover command message to the terminal according to the forward handover request message and the related information about a forward handover, wherein the related information about a forward handover comprises at least one piece of the following information: indication information used to indicate that a terminal accessing the first base station is allowed to perform a forward handover, condition indication information used to indicate that a terminal accessing the first base station is allowed to perform a forward handover, an identifier of a terminal that is in a terminal accessing the first base station and that is allowed to perform a forward handover, or context information of a terminal that is in a terminal accessing the first base station and that is allowed to perform a forward handover.

4. A terminal, wherein the terminal comprises:
a receiving unit, configured to receive first indication information sent by a first base station, wherein the first indication information is used to indicate that the terminal is allowed to perform a forward handover; and
a processing unit, configured to trigger, according to the first indication information received by the receiving unit, a sending unit to send a forward handover request message to a second base station, wherein
the receiving unit is further configured to receive a forward handover command message sent by the second base station according to the forward handover request message; and
the processing unit is further configured to perform a forward handover from the first base station to the second base station according to the forward handover command message received by the receiving unit.

5. The terminal according to claim 4, wherein:
the first indication information comprises an identifier for allowing a terminal to perform a forward handover or configuration information for allowing a terminal to perform a forward handover, wherein
the configuration information for allowing a terminal to perform a forward handover comprises at least one piece of the following information: indication information for allowing a terminal to perform an earlier RLF, condition information for allowing a terminal to perform a forward handover, cell information that is comprised by the second base station and for allowing a terminal to perform a forward handover, shortMAC-I used by a terminal to perform a forward handover, or terminal information for allowing a terminal to perform a forward handover.

6. The terminal according to claim 4 or 5, wherein the first indication information comprises the cell information that is comprised by the second base station and for allowing a terminal to perform a forward handover, and the processing unit is specifically configured to:
obtain information about a target cell; and
when determining that the cell information that is comprised by the second base station and for allowing a terminal to perform a forward handover comprises the information about the target cell, trigger the sending unit to send the forward handover request message to the second base station.

7. A base station, wherein the base station is a second base station, and the second base station comprises:
a receiving unit, configured to receive a forward handover request message sent by a terminal, wherein the forward handover request message is sent by the terminal according to first indication information sent by a first base station, and the first indication information is used to indicate that the terminal is allowed to perform a forward handover; and
a processing unit, configured to trigger, according to the forward handover request message received by the receiving unit, a sending unit to send a forward handover command message to the terminal, so that the terminal performs a forward handover from the first base station to the target second base station according to the forward handover command message.

8. The base station according to claim 7, wherein:
the processing unit is specifically configured to trigger, according to the forward handover request message received by the receiving unit, the sending unit to send an obtaining request message to the first base station;
the receiving unit is further configured to receive an obtaining response message sent by the first base station according to the obtaining request message, wherein the obtaining response message comprises context information of the terminal; and
the processing unit is specifically configured to trigger, according to the context information of the terminal received by the receiving unit, the sending unit to send the forward handover command message to the terminal.

9. The base station according to claim 7, wherein:
the processing unit is specifically configured to trigger, according to the forward handover request message, the sending unit to send an obtaining request message to the first base station, wherein the obtaining request message comprises second indication information;
the receiving unit is further configured to: receive an obtaining response message sent by the first base station when the first base station determines, according to the second indication information, that the terminal is allowed to perform a forward handover, wherein the obtaining response message comprises context information of the terminal; and
the processing unit is specifically configured to trigger, according to the context information of the terminal received by the receiving unit, the sending unit to send the forward handover command message to the terminal.

10. The base station according to claim 7, wherein the forward handover request message comprises the first indication information;
the processing unit is specifically configured to trigger, according to the forward handover request message, the sending unit to send an obtaining request message to the first base station;
the receiving unit is further configured to receive an obtaining response message sent by the first base station according to the obtaining request message, wherein the obtaining response message comprises context information of the terminal and the third indication information; and
the processing unit is specifically configured to: when determining, according to the third indication information comprised by the obtaining response message received by the receiving unit and the first indication information comprised by the forward handover request message received by the receiving unit, that the terminal is allowed to perform a forward handover, trigger the sending unit to send the forward handover command message to the terminal.

11. The base station according to any one of claims 8 to 10, wherein when triggering, according to the forward handover request message, the sending unit to send the obtaining request message to the first base station, the processing unit is specifically configured to:
when determining that the forward handover request message comprises the first indication information, trigger the sending unit to send the obtaining request message to the first base station; or
trigger, according to the first indication information comprised by the forward handover request message and the third indication information that is pre-obtained from the first base station, the sending unit to send the obtaining request message to the first base station.

12. A handover system, wherein the handover system comprises a first base station and a second base station, wherein
the first base station is configured to obtain first indication information, and send the first indication information to a terminal, wherein the first indication information is used to indicate that the terminal is allowed to perform a forward handover; and
the second base station is configured to receive a forward handover request message sent by the terminal according to the first indication information, and send a forward handover command message to the terminal according to the forward handover request message, so that the terminal performs a forward handover from the first base station to the second base station according to the forward handover command message.

13. A handover method, wherein the method comprises:
obtaining, by a first base station, first indication information, wherein the first indication information is used to indicate that a terminal is allowed to perform a forward handover; and
sending, by the first base station, the first indication information to the terminal, so that the terminal sends a forward handover request message to a second base station according to the first indication information, receives a forward handover command message sent by the second base station according to the forward handover request message, and performs a forward handover from the first base station to the second base station according to the forward handover command message.

14. The method according to claim 13, wherein:
the first indication information comprises an identifier for allowing a terminal to perform a forward handover or configuration information for allowing a terminal to perform a forward handover, wherein
the configuration information for allowing a terminal to perform a forward handover comprises at least one piece of the following information: indication information for allowing a terminal to perform an earlier RLF, condition information for allowing a terminal to perform a forward handover, cell information that is comprised by the second base station and for allowing a terminal to perform a forward handover, shortMAC-I used by a terminal to perform a forward handover, or terminal information for allowing a terminal to perform a forward handover.

15. The method according to claim 13 or 14, wherein the method further comprises:
sending, by the first base station, related information about a forward handover to the second base station, so that the second base station sends the forward handover command message to the terminal according to the forward handover request message and the related information about a forward handover, wherein the related information about a forward handover comprises at least one piece of the following information: indication information used to indicate that a terminal accessing the first base station is allowed to perform a forward handover, condition indication information used to indicate that a terminal accessing the first base station is allowed to perform a forward handover, an identifier of a terminal that is in a terminal accessing the first base station and that is allowed to perform a forward handover, or context information of a terminal that is in a terminal accessing the first base station and that is allowed to perform a forward handover.

16. A handover method, wherein the method comprises:
receiving, by a terminal, first indication information sent by a first base station, wherein the first indication information is used to indicate that the terminal is allowed to perform a forward handover;
sending, by the terminal, a forward handover request message to a second base station according to the first indication information;
receiving, by the terminal, a forward handover command message sent by the second base station according to the forward handover request message; and
performing, by the terminal, a forward handover from the first base station to the second base station according to the forward handover command message.

17. The method according to claim 16, wherein:
the first indication information comprises an identifier for allowing a terminal to perform a forward handover or configuration information for allowing a terminal to perform a forward handover, wherein
the configuration information for allowing a terminal to perform a forward handover comprises at least one piece of the following information: indication information for allowing a terminal to perform an earlier RLF, condition information for allowing a terminal to perform a forward handover, cell information that is comprised by the second base station and for allowing a terminal to perform a forward handover, shortMAC-I used by a terminal to perform a forward handover, or terminal information for allowing a terminal to perform a forward handover.

18. The method according to claim 16 or 17, wherein the first indication information comprises the cell information that is comprised by the second base station and for allowing a terminal to perform a forward handover, or the sending, by the terminal, a forward handover request message to a second base station according to the first indication information comprises:
obtaining, by the terminal, information about a target cell; and
sending the forward handover request message to the second base station when the terminal determines that the cell information that is comprised by the second base station and for allowing a terminal to perform a forward handover comprises the information about the target cell.

19. A handover method, wherein the method comprises:
receiving, by a second base station, a forward handover request message sent by a terminal, wherein the forward handover request message is sent by the terminal according to first indication information sent by a first base station, and the first indication information is used to indicate that the terminal is allowed to perform a forward handover; and
sending, by the second base station, a forward handover command message to the terminal according to the forward handover request message, so that the terminal performs a forward handover from the first base station to the target second base station according to the forward handover command message.

20. The method according to claim 19, wherein the sending, by the second base station, a forward handover command message to the terminal according to the forward handover request message comprises:
sending, by the second base station, an obtaining request message to the first base station according to the forward handover request message;
receiving, by the second base station, an obtaining response message sent by the first base station according to the obtaining request message, wherein the obtaining response message comprises context information of the terminal; and
sending, by the second base station, the forward handover command message to the terminal according to the context information of the terminal.

21. The method according to claim 19, wherein the sending, by the second base station, a forward handover command message to the terminal according to the forward handover request message comprises:
sending, by the second base station, an obtaining request message to the first base station according to the forward handover request message, wherein the obtaining request message comprises second indication information;
receiving, by the second base station, an obtaining response message sent by the first base station when the first base station determines, according to the second indication information, that the terminal is allowed to perform a forward handover, wherein the obtaining response message comprises context information of the terminal; and
sending, by the second base station, the forward handover command message to the terminal according to the context information of the terminal.

22. The method according to claim 19, wherein the forward handover request message comprises the first indication information, and the sending, by the second base station, a forward handover command message to the terminal according to the forward handover request message comprises:
sending, by the second base station, an obtaining request message to the first base station according to the forward handover request message;
receiving, by the second base station, an obtaining response message sent by the first base station according to the obtaining request message, wherein the obtaining response message comprises context information of the terminal and the third indication information; and
sending, by the second base station, the forward handover command message to the terminal when determining, according to the third indication information comprised by the obtaining response message and the first indication information comprised by the forward handover request message, that the terminal is allowed to perform a forward handover.

23. The method according to any one of claims 20 to 22, wherein the sending, by the second base station, an obtaining request message to the first base station according to the forward handover request message comprises:
sending, by the second base station, the obtaining request message to the first base station when determining that the forward handover request message comprises the first indication information; or
sending, by the second base station, the obtaining request message to the first base station according to the first indication information comprised by the forward handover request message and the third indication information that is pre-obtained from the first base station.
